**Europäisches Patentamt**

**European Patent Office**

**Office européen des brevets**

(19)

(11) Publication number: **0 022 354**
**A1**

(12)

# EUROPEAN PATENT APPLICATION

(21) Application number: **80302255.7**

(22) Date of filing: **03.07.80**

(51) Int. Cl.³: **H 04 N 5/14**

(30) Priority: **05.07.79 GB 7923419**

(43) Date of publication of application:
**14.01.81 Bulletin 81/2**

(84) Designated Contracting States:
**DE FR NL SE**

(71) Applicant: **THE RANK ORGANISATION LIMITED**
**11 Hill Street**
**London W1X 8AE(GB)**

(72) Inventor: **Moore, William Thomas**
**11 Beaconsfield Road Ealing**
**London W.5.(GB)**

(74) Representative: **Cullis, Roger et al,**
**c/o H.G. Amann Patents Manager The Rank**
**Organisation Limited 439 Godstone Road**
**Whyteleafe, Surrey, CR3 OYG(GB)**

(54) **Signal processing apparatus for image scanners.**

(57) Signal processing apparatus for an image scanner, wherein a transversal filter (16) is in each detector channel located between the detector array (10) and the sampling means 12 in the main signal processing equipment (11) in order to boost frequencies within a range of interest having an upper limit adjacent half the sampling frequency ($F/2$) and to reject higher frequencies within a range having a lower limit adjacent $F/2$. The frequency boost may be phaseless in the case of a symmetric transversal filter. Alternatively, an asymmetric transversal filter may be employed to correct phase errors, even if the selective frequency boost is not required.

Fig. 1

-1-

Signal Processing Apparatus for

Image Scanners

This invention relates to image scanners and, in particular, to signal processing apparatus for use therewith.

In mechanical-optical image scanners, a detector array of one or more detector elements, usually photoconductive detectors, is scanned by an image of a scene to be viewed and produces an electrical signal which is processed and fed to a display device to enable the image to be viewed.

Generally, the signal processing equipment includes sampling means for sampling the signal at a sampling frequency higher than the frequency range of interest, means for amplifying, shaping, storing and otherwise further processing the sampled signal as required, and means for reconstituting the further processed signal ready for supply to the display device.

The characteristics of the detectors, and likewise the signal processing techniques employed, tend to cause roll-off at the higher frequencies. Although noise generated by the detectors and preamplifiers also tends to roll off, this noise roll-off is not as fast as the fall off in signal response. In addition, noise present in the signal being sampled at a frequency above one half the sampling frequency tends to beat down with the sampling frequency to noise of a lower frequency in the range of interest, thereby worsening the signal to noise ratio.

On the other hand, at frequencies below half the sampling frequency, there is a clear benefit to be obtained by boosting higher frequencies within the range of interest, since these frequencies determine the sharpness and detail of the viewed image.

It would therefore be advantageous to provide signal processing equipment which can boost higher frequencies in the range of interest while excluding noise of a frequency above one half the sampling frequency. However, in providing such a boost to the higher frequencies in the range of interest, it is necessary to avoid unwanted disturbance of the relative phases of the components of the original signal, since the effect of a boost producing unwanted phase shifts would be to increase the noise level at a faster rate than the resolution of the image is improved.

The present invention has for an object to provide a solution to this problem.

Accordingly, signal processing apparatus for an image scanner and according to one aspect of the invention comprises one or more detector elements scanned by an image of a scene to be viewed and producing an electrical signal representative of said image, sampling means operative at a predetermined sampling frequency $F$ for sampling said electrical signal to enable further processing thereof, means for reconstituting the sampled and further processed signal and a display device for receiving the reconstituted signal to enable said image to be viewed, wherein a transversal filter is located in the or each detector channel ahead of the sampling means, said filter being constructed with respect to the sampling frequency to boost with minimum undesired phase shifts frequencies in a range having an upper limit adjacent $F/2$ and substantially to reject frequencies in a range having a lower limit adjacent $F/2$.

Another problem which arises with signal processing equipment of the kind in question is that residual phase errors may exist in the signal even when the processing methods employed are designed to minimise introduction of phase shifts. In particular, phase errors arise due to the transit time of the charge carriers in a photoconductive detector. With the arrangement in accordance with the invention, the transversal filter may depart from a symmetrical construction to an extent sufficient to correct residual phase errors in the signal being processed at frequencies in said range having an upper limit adjacent $F/2$.

However, the invention is also applicable to the case where correction for phase errors is desirable, whether or not a frequency selective signal boost is also required.

Thus, according to another aspect of the invention, signal processing apparatus for an image scanner comprises one or more detector elements · scanned by an image of a scene to be viewed and producing an electrical signal representative of said image, sampling means operative at a predetermined sampling frequency $F$ for sampling said electrical signal to enable further processing thereof, means for reconstituting the sampled and further processed signal and a display device for receiving the reconstituted signal to enable said image to be viewed, wherein the or each detector element is a photoconductive detector, and one or more transversal filters are located in the signal path between the one or more photoconductive detectors and the display device, said filter being asymmetrically constructed substantially to correct phase errors in the signal being processed, including phase errors due to the transit time of the charge carriers in the one or more photoconductive detectors.

A practical arrangement of signal processing apparatus in accordance with the invention will now be described by way of example with reference to the accompanying drawings, in which:-

Figure 1 is a block diagram of a chain of signal processing apparatus,

Figure 2 is a circuit diagram of a symmetrical transversal filter,

Figure 3 is a circuit diagram of an asymmetrical transversal filter, and

Figure 4 is the frequency response curve for the filter of Figure 2.

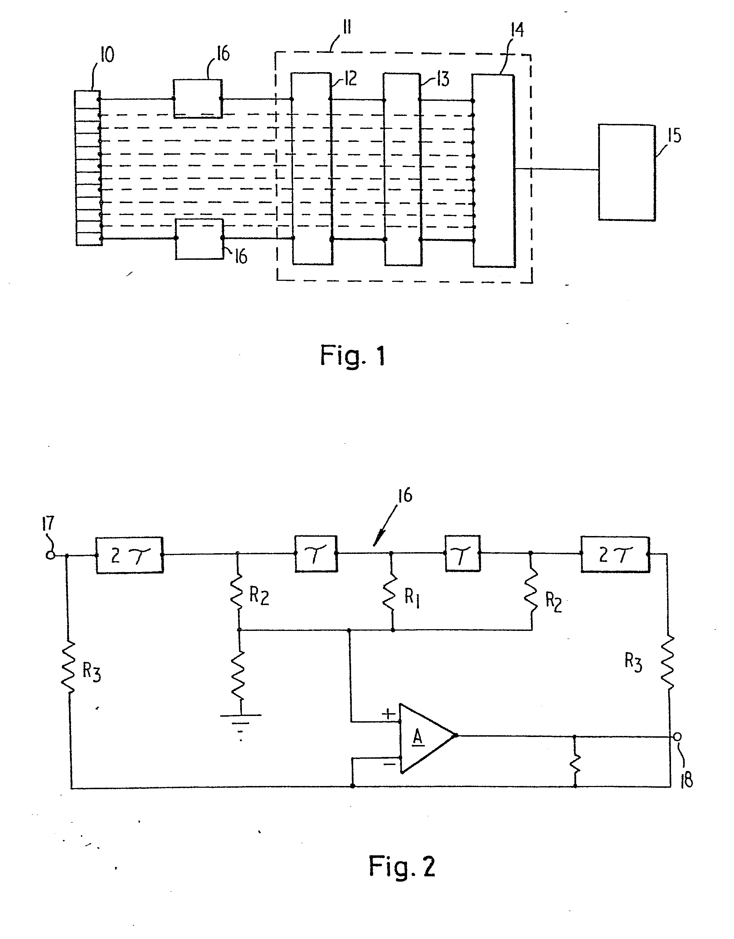

The apparatus shown in Figure 1 comprises an array 10 of detector elements; signal processing equipment 11 constituted by a sampling means 12, further processing means 13 such as amplifying means, shaping means, signal storage means and in general means for effecting any such further process functions on the signal as may be required, and signal reconstituting means 14; and a display device 15. For convenience and clarity the detector array 10 and the display device 15 are considered part of the signal processing chain, although they do not actually perform any signal processing function in themselves.

The sampling means 12, which is of a kind conventional in such processing equipment, operates at a predetermined sampling frequency $F$ above the range of frequencies of interest.

In order to provide a phaseless boost to higher frequencies in the range of interest below $F/2$, without creating aliasing problems due to heterodyning of noise at still higher frequencies above $F/2$, a transversal filter 16 is provided in each detector channel between the detector array 10 and the processing equipment 11. In the drawing, the filters 16 for the first and nth detector channels are indicated.

It is possible to construct a symmetrical transversal filter with a substantially constant group delay (negative phase free) frequency response function $R(\underline{f})$ of the general form:-

$$R(\underline{f}) \;=\; \underline{a} + \underline{b}\,\cos 2\pi\,\underline{f}\,\widetilde{\tau} + \underline{c}\,\cos 4\pi\,\underline{f}\,\widetilde{\tau}$$
$$+ \underline{d}\,\cos 6\pi\,\underline{f}\,\widetilde{\tau} \;\ldots\ldots\;,$$

where $\underline{a}$, $\underline{b}$, $\underline{c}$ .... are tapping ratio coefficients of the filter and $\widetilde{\tau}$ is the delay parameter of the filter stages.

One simple transversal filter 16 having such a frequency response function is shown in Figure 2, wherein 17 designates the input and 18 designates the output, A indicates a differential amplifier, delay stages are marked $\widetilde{\tau}$ and resistors are designated R.

It is to be noted that the filter 16 in Figure 2 is of symmetrical form, with balanced resistors $R_2$ of equal value and balanced resistors $R_3$ of equal value. Accordingly, this filter has a response

-8-

function of the form:-

$$R(\underline{f}) = \underline{a} + \underline{b} \cos 2\pi \underline{f} \, T - \underline{d} \cos 6\pi \underline{f} \, T.$$

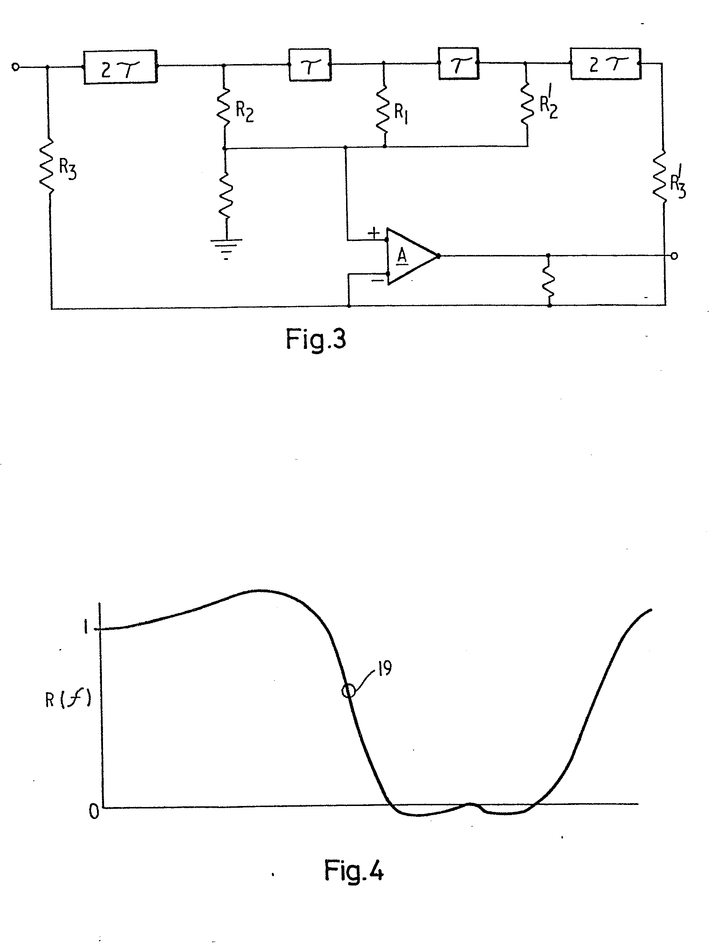

This response function is illustrated in Figure 4.

The delay parameter $T$ is selected such that the half sampling frequency $\underline{F}/2$ approximately coincides with the point marked 19 on the response curve, in order that high frequency noise is rejected, at least in a frequency range having a lower limit adjacent $\underline{F}/2$. A back-up filter (not shown) is provided to reject still higher frequencies above about $1\frac{1}{2}$ times the Nyquist rate, where the response curve rapidly rises again. The phase characteristic of this back-up filter is relatively unimportant, as its operational frequency range is much higher than the frequency range of interest. The boost given to higher frequencies within the range of interest, in particular in a range having an upper limit adjacent $\underline{F}/2$, is apparent from the shape of the response curve.

The transversal filter 16 shown in Figure 2 with the response curve of Figure 4 is of a relatively simple form; a filter with a larger number of delay stages can be constructed with a performance which conforms more closely to an ideal response curve. In particular, a transversal filter constructed with a response function including the $\underline{c} \cos 4\pi \underline{f} \, T$ term would minimise the ripple about R = 0 in the response curve of Figure 4.

The filter 16 of Figure 2 is a matched phase transversal filter which boosts the signal in the desired range below $\underline{F}/2$ without introducing any phase shifts. However, phase errors exist in the signal due to other factors, including in particular phase errors due to the transit time of the charge carriers in detectors which are of the photoconductive type. The filter of Figure 2 may be modified, to assume the form of the asymmetrical filter 20 indicated in Figure 3, in order to provide for correction of these residual phase errors.

In the asymmetrical transversal filter of Figure 3, the resistors $R_2$ and $R_2'$, and possibly also the resistors $R_3$ and $R_3'$, are made unequal. Thus, assuming $R_2 \neq R_2'$, the filter of Figure 3 has a frequency response function $R(\underline{f})$ as follows:-

$$R(\underline{f}) = \underline{a} + \underline{b_1} \cos 2\pi \underline{f} \, T + \underline{b_2} \sin 2\pi \underline{f} \, T ,$$
$$- \underline{d} \cos 6\pi \underline{f} \, T ,$$

where $\underline{b_1} = \underline{a} R_1 \left( \dfrac{1}{R_2} + \dfrac{1}{R_2'} \right)$

and $\underline{b_2} = \underline{a} R_1 \left( \dfrac{1}{R_2} - \dfrac{1}{R_2'} \right)$ .

The modulus of the response $|R(\underline{f})|$ is given by:-

$$|R(\underline{f})| = \sqrt{[(\underline{a} - \underline{d}\cos 6\pi\, \underline{f}\tau + \underline{b}_1 \cos 2\pi\, \underline{f}\tau)^2 + \underline{b}_2^{\,2} \sin^2 2\pi\, \underline{f}\tau\,]}$$

and the phase shift $(\theta)$ is given by:-

$$\theta = \tan^{-1} \frac{\underline{b}_2 \sin 2\pi\, \underline{f}\tau}{\underline{a} - \underline{d}\cos 6\pi\, \underline{f}\tau + \underline{b}_1 \cos 2\pi\, \underline{f}\tau}$$

Thus, the coefficients $\underline{a}$, $\underline{b}_1$, $\underline{b}_2$, $\underline{d}$ can be selected to assist the desired correction of residual phase errors, whilst at the same time the boosting-of frequencies below $\underline{F}/2$ and the rejection of frequencies in a range higher than $\underline{F}/2$ is maintained. For the correction of such residual phase errors, the filter of Figure 3 will have the minimum necessary departure from symmetry, so that the coefficient $\underline{b}_2$ will generally be small in value. The same general consideration applies if, in addition, $R_3 \neq R_3{}'$, when the phase shift $\theta$ is given by:-

$$\theta = \tan^{-1} \frac{\underline{b}_2 \sin 2\pi\, \underline{f}\tau - \underline{d}_2 \sin 6\pi\, \underline{f}\tau}{\underline{a} + \underline{b}_1 \cos 2\pi\, \underline{f}\tau - \underline{d}_1 \cos 2\pi\, \underline{f}\tau}$$

When an asymmetric transverse filter with a large number of delay stages is constructed, with a frequency response $R(\underline{f})$ of the general form:-

$$R(\underline{f}) = \underline{a} + \underline{b_1} \cos 2\pi \underline{f} \mathcal{T} - \underline{b_2} \sin 2\pi \underline{f} \mathcal{T}$$
$$+ \underline{c_1} \cos 4\pi \underline{f} \mathcal{T} + \underline{c_2} \sin 2\pi \underline{f} \mathcal{T}$$
$$\cdots \cdots ,$$

more diverse phase error corrections are possible, in accordance with the increased number of coefficients, which represent tapping ratios in the transversal filter, available for adjustment. In this connection, it is to be noted that these coefficients may be given values corresponding to negative resistor values, since in physical reality this simply means the construction of a filter in which the corresponding resistors are connected to the negative input instead of the positive input of the differential amplifier A.

It will also be apparent from the above description referring to Figure 3 that the use of an asymmetric transversal filter is applicable to the case when correction of phase errors is desirable whether or not a selective frequency boost is required at the same time. In this case, it may be unnecessary to minimise the departures of the filter from a symmetrical arrangement, depending on the magnitude of the phase errors to be corrected. Thus, in practice, the phase shifts arising due to all factors, including phase shifts due to the transit

-12-

time of the charge carriers in the photoconductive detectors, will be observed, and the tapping ratios in the transversal filter (which determine the magnitudes of the coefficients $\underline{a}$, $\underline{b}$, $\underline{c}$ .... in the above equations, will be chosen so that the phase term $\Theta$ as a function of frequency acts to compensate these observed phase shifts.

Finally, the invention as above described is also applicable to a scanner wherein a single detector element is employed.

## Claims

1.    Signal processing apparatus for an image scanner
comprising one or more detector elements scanned by an
image of a scene to be viewed and producing an
electrical signal representative of said image,
sampling means operative at a predetermined sampling
frequency $F$ for sampling said electrical signal to
enable further processing thereof, means for reconstituting the sampled and further processed signal
and a display device for receiving the reconstituted
signal to enable said image to be viewed, wherein a
transversal filter is located in the or each detector
channel ahead of the sampling means, said filter being
constructed with respect to the sampling frequency to
boost with minimum undesired phase shifts frequencies
in a range having an upper limit adjacent $F/2$ and
substantially to reject frequencies in a range having
a lower limit adjacent $F/2$.

2.    Apparatus according to claim 1, wherein the
transversal filter is a matched phase symmetrical
filter giving a substantially phaseless boost to
frequencies in said range having an upper limit
adjacent $F/2$.

3.    Apparatus according to claim 2, wherein the transversal filter has a frequency response $R(\underline{f})$ of the general form:-

$$R(\underline{f}) = \underline{a} + \underline{b} \cos 2\pi \, \underline{f} \, \mathcal{T} + \underline{c} \cos 4\pi \, \underline{f} \, \mathcal{T}$$
$$+ \underline{d} \cos 6\pi \, \underline{f} \, \mathcal{T} \, \ldots\ldots,$$

where $\underline{a}$, $\underline{b}$, $\underline{c}$ .... are tapping ratio coefficients of the filter and $\mathcal{T}$. is the time delay parameter of the filter stages, the parameter $\mathcal{T}$ being selected to boost frequencies in the desired range below $\underline{F}/2$ and to reject frequencies in the desired range above $\underline{F}/2$.

4.    Apparatus according to claim 3, wherein the transversal filter has a frequency response of the form:-

$$R(\underline{f}) = \underline{a} + \underline{b} \cos 2\pi \, \underline{f} \, \mathcal{T} - \underline{d} \cos 6\pi \, \underline{f} \, \mathcal{T} \, .$$

5.    Apparatus according to claim 1, wherein the transversal filter departs from a symmetrical construction to an extent sufficient to correct residual phase errors in the signal being processed at frequencies in said range having an upper limit adjacent $\underline{F}/2$.

6.    Apparatus according to claim 5, wherein the transversal filter has a frequency response $R(\underline{f})$ of the general form:-

$$R(\underline{f}) = \underline{a} + \underline{b}_1 \cos 2\pi \underline{f} T + \underline{b}_2 \sin 2\pi \underline{f} T$$
$$+ \underline{c}_1 \cos 4\pi \underline{f} T + \underline{c}_2 \sin 4\pi \underline{f} T$$
$$+ \ldots\ldots ,$$

where $\underline{a}$, $\underline{b}_1$, $\underline{b}_2$, $\underline{c}_1$ .... are tapping ratio coefficients of the filter and $T$ is the time delay parameter of the filter stages, the parameter $T$ being selected to boost frequencies in the desired range below $\underline{F}/2$ and to reject frequencies in the desired range above $\underline{F}/2$, said coefficients being selected to correct residual phase errors.

7.      Apparatus according to claim 6, wherein the transversal filter has a frequency response of the form:-

$$R(\underline{f}) = \underline{a} + \underline{b}_1 \cos 2\pi \underline{f} T + \underline{b}_2 \sin 2\pi \underline{f} T$$
$$- \underline{d}_1 \cos 6\pi \underline{f} T - \underline{d}_2 \sin 6\pi \underline{f} T ,$$

and gives a phase shift ($\theta$) of magnitude:-

$$\theta = \tan^{-1} \frac{\underline{b}_2 \sin 2\pi \underline{f} T - \underline{d}_2 \sin 6\pi \underline{f} T}{\underline{a} + \underline{b}_1 \cos 2\pi \underline{f} T - \underline{d}_1 \cos 6\pi \underline{f} T} ,$$

where the coefficient $\underline{a}$ and at least one of $\underline{b}_1$ and $\underline{d}_1$ and of $\underline{b}_2$ and $\underline{d}_2$ is not equal to zero.

8.      Apparatus according to any one of claims 1 to 7, including a back-up filter in the or each detector channel ahead of the sampling means to reject frequencies above the upper limit of the range of frequencies rejected by the transversal filter.

9. Signal processing apparatus for an image scanner comprising one or more detector elements scanned by an image of a scene to be viewed and producing an electrical signal representative of said image, sampling means operative at a predetermined sampling frequency $F$ for sampling said electrical signal to enable further processing thereof, means for reconstituting the sampled and further processed signal and a display device for receiving the reconstituted signal to enable said image to be viewed, wherein the or each detector element is a photoconductive detector, and a transversal filter is located in the signal path between the one or more photoconductive detectors and the display device, said filter being asymmetrically constructed substantially to correct phase errors in the signal being processed, including phase errors due to the transit time of the charge carriers in the one or more photoconductive detectors.

10. Apparatus according to claim 9, wherein the transversal filter is located in the or each detector channel ahead of the sampling means.

11.  Apparatus according to claim 9 or claim 10, wherein the transversal filter has a frequency response $R(\underline{f})$ of the general form:-

$$R(\underline{f}) = \underline{a} + \underline{b}_1 \cos 2\pi \underline{f}\Upsilon + \underline{b}_2 \sin 2\pi \underline{f}\Upsilon$$
$$+ \underline{c}_1 \cos 4\pi \underline{f}\Upsilon + \underline{c}_2 \sin 4\pi \underline{f}\Upsilon$$
$$\ldots\ldots,$$

where $\underline{a}$, $\underline{b}_1$, $\underline{b}_2$, $\underline{c}_1$, $\underline{c}_2$ .... are tapping ratio coefficients of the filter and $\Upsilon$ is the time delay parameter of the filter stages, said coefficients being selected to correct said phase errors.

12.  Apparatus according to claim 11, wherein the transversal filter has a frequency response of the form:-

$$R(\underline{f}) = \underline{a} + \underline{b}_1 \cos 2\pi \underline{f}\Upsilon + \underline{b}_2 \sin 2\pi \underline{f}\Upsilon$$
$$- \underline{d}_1 \cos 6\pi \underline{f}\Upsilon - \underline{d}_2 \sin 6\pi \underline{f}\Upsilon,$$

and gives a phase shift $(\theta)$ of magnitude:-

$$\theta = \tan^{-1} \frac{\underline{b}_2 \sin 2\pi \underline{f}\Upsilon - \underline{d}_2 \sin 6\pi \underline{f}\Upsilon}{\underline{a} + \underline{b}_1 \cos 2\pi \underline{f}\Upsilon - \underline{d}_1 \cos 6\pi \underline{f}\Upsilon},$$

where the coefficient $\underline{a}$ and at least one of $\underline{b}_1$ and $\underline{d}_1$ and of $\underline{b}_2$ and $\underline{d}_2$ is not equal to zero.

1/2

Fig. 1

Fig. 2

Fig.3

Fig.4

0022354

**European Patent Office**

**EUROPEAN SEARCH REPORT**

Application number

EP 80 30 2255

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | |
| | JOURNAL OF THE SMPTE, vol. 82, no. 8, August 1973 NEW YORK (US) GOLDBERG: "PCM Encoded NTSC Color Television Subjective Tests" pages 649-654 | 1,9 | H 04 N 5/14 |
| | * Page 650, left-hand column, line 22 to center column line 12, page 652, center column, line 11 to left-hand column, line 26 * | | |
| | --- | | |
| | I.E.E.E. TRANSACTIONS ON COMMUNI-CATIONS TECHNOLOGY, vol. COM-12, no. 3, September 1964 NEW YORK (US) BRUCE: "Optimum Pre-Emphasis and De-Emphasis Networks for Transmission of Television by PCM" pages 91-96 | 1 | TECHNICAL FIELDS SEARCHED (Int. Cl.³) H 04 N 5/14 7/13 9/02 9/535 |
| | * Page 91, right-hand column, line 33 to page 95, left-hand column, line 23 * | | |
| | --- | | |
| | US - A - 4 074 308 (GIBSON) | 1 | |
| | * Column 1, line 1 to column 3, line 13 * | | |
| | ----- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 14-10-1980 | CRISTOL |

EPO Form 1503.1 06.78